# EUROPEAN PATENT APPLICATION

(11) **EP 4 398 491 A1**
(43) Date of publication of application: **10.07.2024**
(21) Application number: 23305014.5
(22) Date of filing: 05.01.2023
(51) Int. Cl.: H04B 5/00

(54) **NFC DEVICE CONFIGURED FOR WIRELESS POWER TRANSFER**

(71) Applicant: STMICROELECTRONICS (GRENOBLE 2) SAS, 38000 Grenoble (FR); STMicroelectronics Austria GmbH, 8020 Graz (AT)
(72) Inventor: TISSERAND, Bruno, 38100 GRENOBLE (FR); REGENFELDER, Oliver, 8020 GRAZ (AT); REGNIER, Laurent, 38400 Saint Martin d'Hères (FR); RAMPETSREITER, Martin, 8054 Graz (AT); CHLESTIL, Christoph, 8111 Gratwein Straßengel (AT)
(74) Representative: Cabinet Beaumont

(57) **Abstract**

The present disclosure relates to a NFC device (110) configured for wireless power transfer, the NFC device comprising:
- an antenna (111);
- a frontend circuit (112) coupled to the antenna;
- a microcontroller unit (113) coupled to the frontend circuit, the microcontroller unit comprising an analog-to-digital converter (114);
wherein the analog-to-digital converter is configured to receive an analog amplitude and/or phase signal (AM/PH) from the frontend circuit, and to convert said analog signal into a digital signal (DS), and the microcontroller unit is configured to process the digital signal in order to detect a variation in the amplitude and/or phase of the analog signal, so as to detect a change of impedance within the field of the NFC device.

## Description

### Technical field

The present disclosure relates generally to electronic devices incorporating a near-field communication (NFC) circuit, more commonly called NFC devices. The present disclosure more particularly relates to an NFC device configured for wireless power transfer, for example to detect a foreign object during power transfer and/or to control the power transfer.

### Background art

Wireless power transfer (WPT), or wireless power transmission, is used for various applications. One technique of wireless power transfer uses inductive coupling between a power transmitter and a power receiver, for example a resonant inductive coupling. For example, a transmitter, connected to a power source, converts electrical current into an alternating electromagnetic field through a first induction coil, and sends it to a power receiver. The power receiver comprises a second induction coil electromagnetically coupled to the first induction coil, and the electromagnetic field formed by the first induction coil induces an alternating current (AC) in the second induction coil. The induced alternating current may directly drive (supply) a load, or may drive a load with a direct current (DC) voltage generated by a rectifier in the power receiver. According to a resonant inductive coupling technique, each of the power transmitter and the power receiver comprises a resonant circuit (or oscillating circuit, or resonant tank), which may consist of a capacitor connected to the inductive coil, or a self-resonant coil, and the oscillating circuits of the power transmitter and the power receiver are tuned to resonate at the same resonant frequency.

In some applications, wireless communication is used between the power transmitter and the power receiver, for example to initialize the power transfer, to adjust the supplied power level during the power transmission, or to stop the power transfer. For example, Near-Field Communication (NFC) technology may be used for the wireless communication.

Near-Field communication technology typically uses a radiofrequency electromagnetic field, also called "carrier field", typically at 13.56 MHz, generated by a first NFC device to detect and communicate with a second NFC device within range. Depending on the application, for a communication, one of the first and second NFC devices operates in so-called reader mode (NFC transmitter, or NFC transceiver), while the other of the first and second NFC devices operates in so-called card mode (NFC receiver), or both the first and second NFC devices communicate in peer-to-peer (P2P) mode.

In some particular applications, the carrier field may also be used to wirelessly supply a load of the second NFC device acting as a power receiver, when the second NFC device (NFC receiver) is adapted to NFC power transfer ("NFC charging"). In these applications, the first NFC device (NFC transmitter) acts as a power transmitter. The antenna of each of the first and second NFC devices is then adapted to manage both communications and charging. NFC charging is for example discussed in the NFC Forum Wireless Charging Specifications (WLC Specifications).

In other applications, NFC is used only for wireless communication, and not for charging, for example in applications in which the power to be transferred is relatively high. The antenna of each of the first and second NFC devices is used only for communications, and the power transmitter and power receiver each have an antenna for power transfer. For example, the first NFC device (NFC transmitter) is coupled to, or included in, the wireless power transmitter, and the second NFC device (NFC receiver) is coupled to, or included in, the wireless power receiver. In the following disclosure, this may also be designated as "NFC charging".

A particular application of wireless power transmission using NFC for wireless communications is the so-called "Ki Cordless Kitchen standard" ("Ki standard") developed by the Wireless Power Consortium (WPC), which is dedicated to the wireless transmission of power to cordless kitchen appliances, such as rice cookers, toaster, blenders, coffee makers, kettles, fryers and more. For example, in a wireless power transmission to a kitchen appliance, the first NFC device is coupled to, or included in, the wireless power transmitter, such as a kitchen hob, and the second NFC device is coupled to, or included in, the kitchen appliance, acting as a wireless power receiver.

A difficulty with wireless power transfer is that a foreign object (FO) of an electrically-conductive material may inadvertently be placed or fall within the field of the power transmitter during the power transfer (charging), for example between the power transmitter and the power receiver. This is a concern because the alternating electromagnetic field generated by the power transmitter can induce eddy currents in the electrically-conductive material that is exposed to the field, and the eddy currents may cause this material to heat up. Therefore, it is desired to detect the presence of a foreign object within range of the power transmitter so that the foreign object can be removed, and/or the wireless power transfer can be aborted or the level of transferred power be reduced, for efficient power deliver and safety of operation.

In the application of NFC charging, it is desired that the NFC transmitter can detect the presence of a foreign object, in particular during wireless power transfer. More generally, it is desired that the NFC transmitter can control the wireless power transfer.

### Summary of Invention

One embodiment provides a NFC device configured for wireless power transfer, the NFC device comprising:
- an antenna;
- a frontend circuit coupled to the antenna;
- a microcontroller unit coupled to the frontend circuit, the microcontroller unit comprising an analog-to-digital converter;
wherein the analog-to-digital converter is configured to receive an analog amplitude and/or phase signal from the frontend circuit, and to convert said analog signal into a digital signal, and the microcontroller unit is configured to process the digital signal in order to detect a variation in the amplitude and/or phase of the analog signal, so as to detect a change of impedance within the field of the NFC device.

In an embodiment, the microcontroller unit is adapted to:
- detect a change of impedance during a wireless power transfer between the NFC device and an NFC receiver; and/or
- compare the variation of the analog signal with at least one detection threshold and/or with a change duration threshold or a pulse duration threshold; and/or
- send a control signal to the frontend circuit, for example to stop the power transfer or to change the level of the transferred power; and/or
- send a warning signal to a user interface coupled to the microcontroller unit, for example to warn a user of a presence of an electrically-conductive foreign object.

One embodiment provides a method for controlling wireless power transfer using a NFC device having a frontend circuit coupled to a microcontroller unit, the controlling method comprising:
- sending an analog amplitude and/or phase signal from the frontend circuit to the microcontroller unit, the microcontroller unit comprising an analog-to-digital converter;
- converting the analog amplitude and/or phase signal into a digital signal using the analog-to-digital converter; and
- processing the digital signal, using the microcontroller unit, in order to detect a variation of the analog amplitude and/or phase signal, so as to detect a change of impedance within the field of the NFC device.

In an embodiment, the method is implemented during a wireless power transfer between the NFC device and an NFC receiver, for example continuously during the wireless power transfer.

In an embodiment, the method comprises a first detection method implemented by the microcontroller unit, the first detection method comprising, after or during the step of processing the digital signal:
- determining if the impedance change is greater or equal to a detection threshold; and, for example,
- determining if the duration of the impedance change is greater or equal to a minimal change duration.

In an embodiment, the first detection method is adapted to detect whether an electrically-conductive foreign object is within the field of the NFC device, the impedance change is, for example, an impedance rise, and the detection threshold is a first detection threshold.

In an embodiment, the first detection method is adapted to detect whether a power receiver, or an electrically-conductive foreign object, is removed from the field of the NFC device, the impedance change is, for example, an impedance drop, and the detection threshold is a second detection threshold.

In an embodiment, determining if the impedance change is greater or equal to the detection threshold comprises:
- performing an averaging of the digital signal during an averaging period, in order to generate a current average value;
- comparing the current average value with an average reference value; and
- determining if the difference between the current average value and the average reference value is greater or equal to the detection threshold.

In a particular embodiment, the average reference value corresponds to a previous average value obtained by a previous averaging, the current averaging being separated from the previous averaging by a transition period.

In an embodiment, the method comprises a second detection method implemented by the microcontroller unit, the second detection method being for example adapted to detect whether a wireless power transfer stop signal is sent to the NFC device, the second detection method comprising:
- detecting a sequence of at least four periods of a square-wave signal, each period comprising one or more signal transitions having a duration of less than a transition threshold and/or each period comprising a high pulse duration or low pulse duration of less than a pulse duration threshold.

The following embodiments can be applied to an NFC device and/or to a method for controlling wireless power transfer using an NFC device.

In an embodiment, the analog-to-digital converter is an n-bit analog-to-digital converter, for example where n is equal to at least 10.

In an embodiment, the microcontroller unit further comprises a processing unit adapted to process the digital signal.

In an embodiment, the analog-to-digital converter is coupled to a first pin of the frontend circuit adapted to output the amplitude analog signal and/or a second pin of the frontend circuit adapted to output the phase analog signal.

In an embodiment, the analog signal is an electrical signal.

One embodiment provides a wireless power transmission system comprising:
- a wireless power transmitter comprising or coupled to any one of the NFC devices described above, the NFC device being an NFC transmitter.

In an embodiment, the wireless power transmission system further comprises a wireless power receiver including:
- a receiver antenna adapted to be electromagnetically coupled to the antenna of the NFC transmitter; and
- an NFC receiver coupled, for example connected, to the receiver antenna, and configured to manage Near Field communications with the NFC transmitter.

In an embodiment, the NFC receiver is also configured to manage NFC charging, and is connected to a load of the wireless power receiver, for example via a load controller.

In an embodiment, the wireless power transmission system further comprises a user interface coupled to the microcontroller unit of the NFC transmitter, the user interface being adapted to send a warning signal to a user, for example if the impedance change corresponds to the presence of an electrically-conductive foreign object in the field of the NFC transmitter.

### Brief description of drawings

The foregoing features and advantages, as well as others, will be described in detail in the following description of specific embodiments given by way of illustration and not limitation with reference to the accompanying drawings, in which:
Figure 1A schematically illustrates, in the form of blocks, a wireless power transfer system comprising an NFC device according to an embodiment, in a first configuration;
Figure 1B schematically illustrates, in the form of blocks, the wireless power transfer system of Figure 1A, in a second configuration;
Figure 2A is a graph illustrating an example of the evolution, as a function of time, of an analog signal that can be detected by a microcontroller in an NFC device according to an embodiment;
Figure 2B is a graph illustrating another example of the evolution, as a function of time, of an analog signal that can be detected by a microcontroller in an NFC device according to an embodiment;
Figure 3A is a graph illustrating another example of the evolution, as a function of time, of an analog signal that can be detected by a microcontroller in an NFC device according to an embodiment;
Figure 3B is a graph illustrating a portion of the graph of Figure 3A in more detail;
Figure 3C is a graph illustrating another example of the evolution, as a function of time, of an analog signal that can be detected by a microcontroller in an NFC device according to an embodiment; and
Figure 4 shows graphs illustrating a method for detecting a wireless power transfer stop signal in a method for controlling wireless power transfer according to an embodiment.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, the NFC communication protocols and the usual electronic devices or circuits implementing these protocols have not been described, these protocols being well-known by the one skilled in the art and being compatible with the described embodiments. Similarly, NFC charging, for example according to the NFC Forum Wireless Charging Specification, and the usual electronic devices or circuits adapted to NFC charging, have not been described, the described embodiments being compatible with known NFC charging techniques.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

In the following disclosure, when reference is made to a "power transmitter" or a "transmitter", it designates a wireless power transmitter. Similarly, when reference is made to a "power receiver" or a "receiver", it designates a wireless power receiver, and when reference is made to a "power transmission system", it designates a wireless power transmission system.

In the following disclosure, when reference is made to an "NFC device", it designates an electronic device incorporating one or several near-field communication (NFC) circuits. The near-field communication circuits each have various elements or electronic circuits for generating or detecting a radiofrequency signal using an NFC antenna, and/or modulation or demodulation circuits. Each NFC antenna may comprise, or be part of, an oscillating circuit.

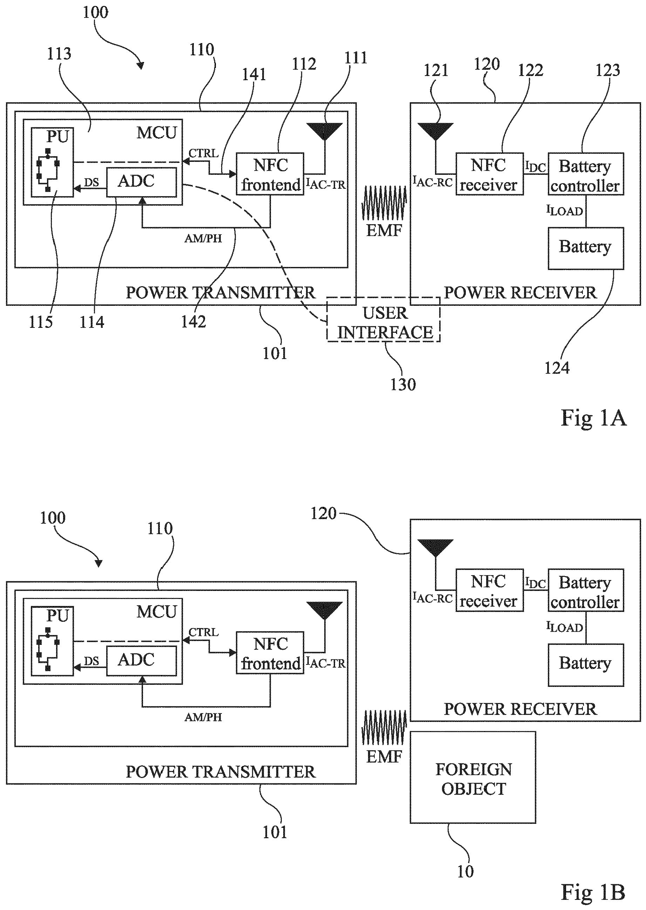

Figures 1A and 1B schematically illustrate, in the form of blocks, a wireless power transfer system 100 comprising an NFC device 110 according to an embodiment. Figure 1A illustrates the wireless power transfer system 100 in a first configuration, in which a power receiver 120 is within range of the NFC device 110. Figure 1B illustrates the wireless power transfer system 100 in a second configuration, in which a foreign object 10 is also within the field of the NFC device 110.

The NFC device 110 comprises:
- an antenna 111;
- a frontend circuit 112 (NFC frontend) coupled, for example connected, to the antenna 111;
- a microcontroller unit 113 (MCU) comprising an analog-to-digital converter 114 (ADC), for example as a peripheral of the MCU, and a processing unit 115 (PU) configured to run a computer program, for example according to one of the methods described hereafter.

Alternatively, the analog-to-digital converter 114 is not included in the microcontroller unit 113, and is connected, for example coupled, to the microcontroller unit 113.

The computer program is for example stored in a memory of the microcontroller unit (not represented), such as a FLASH memory and/or RAM (Random Access Memory).

The NFC device 110 may be referred as an "NFC transmitter", and the antenna 111 as a "transmitter antenna". The frontend circuit 112 may be referred as an "NFC frontend". The microcontroller unit 113 may be referred as a "microcontroller".

In the example represented in Figures 1A and 1B, the NFC transmitter 110 is included in a power transmitter 101. For example, the power transmitter 101 comprises one or several printed circuit boards (PCB) to which are assembled some or all the elements of the NFC transmitter 110, and for example other elements (not represented) of the power transmitter 101. In a particular example, the first NFC transmitter 110 may correspond to the power transmitter 101. Alternatively, the NFC transmitter 110 and the power transmitter 101 may be distinct from each other, and the NFC transmitter 110 may be coupled, for example connected, to the power transmitter 101.

The NFC transmitter 110 comprises, for example, at least a microchip or electronic circuit capable of near field communications.

In the example represented in Figures 1A and 1B, the frontend circuit 112 is distinct from the microcontroller 113. Alternatively, the frontend circuit 112 and the microcontroller 113 may be included in a same unit, which may be referred as an "NFC controller".

The transmitter antenna 111 may comprise one or more inductive coils or elements, for example in the form of a patch antenna or a microstrip antenna. The at least one inductive coil or element is, for example, connected to, or comprised in, an oscillating circuit (not represented).

The frontend circuit 112 is adapted to perform operations for generating and receiving radiofrequency signals by means of the transmitter antenna 111. The frontend circuit 112 for example comprises:
- a circuit for supplying the transmitter antenna 111 with an alternating current (I_{AC-TR}) so that a corresponding radiofrequency electromagnetic field EMF can be emitted by the transmitter antenna 111;
- modulating and/or demodulating circuits configured to modulate and/or demodulate a radiofrequency signal in order to send data to, and/or receive data from, another NFC device, for example an NFC receiver, using NFC communication protocols.

The frontend circuit 112 may be connected or coupled to, or may include, an impedance matching circuit (not represented), which in turn is connected or coupled to the transmitter antenna 111. The frontend circuit 112 may also comprise other circuits (not represented), which are standard circuits well known to those skilled in the art.

The frontend circuit 112 may be referred as an "NFC reader".

The microcontroller 113 is connected or coupled to the frontend circuit 112, for example using a digital connection and an analog connection. The microcontroller 113 is for example configured to implement a wireless control protocol and to transmit an instruction signal to the frontend circuit 112. In return, the frontend circuit 112 may send a confirmation signal to the microcontroller 113. This is represented in Figures 1A and 1B by a double arrow 141 (CTRL).

The analog-to-digital converter 114 may be connected to one or several dedicated pins of the frontend circuit 112, for example a first pin adapted to output an analog amplitude signal (AM) and/or a second pin adapted to output an analog phase signal (PH). For example, each of the first and second pins can be configured to route an amplitude or phase signal from the receiver to said pin. The one or several dedicated pins can be for example one or several Test Analog Digital (TAD) pins.

The analog amplitude and/or the phase signal (AM/PH) is sent by the frontend circuit 112 to the analog-to-digital converter 114 after an internal extraction of said amplitude and/or phase signal. This is represented in Figures 1A and 1B by a single arrow 142. The analog-to-digital converter 114 transforms the analog signal AM/PH into a digital signal (DS). The microcontroller 113 is configured to process the digital signal DS, for example using the processing unit 115, in order to detect a variation in the analog amplitude and/or phase signal, so as to detect an impedance change within the field of the NFC transmitter 110. In other words, the microcontroller 113 is adapted to monitor the impedance change of the NFC transmitter 110 by processing the analog amplitude and/or the phase signal AM/PH sent by the frontend circuit 112. For example, the microcontroller 113 is adapted to continuously monitor the impedance change of the NFC transmitter 110 by continuously monitoring the analog amplitude and/or the phase signal.

As represented in Figures 1A and 1B, the wireless power transfer system 100 further includes a power receiver 120.

The power receiver 120 comprises:
- a receiver antenna 121 adapted to be electromagnetically coupled to the transmitter antenna 111 when the power receiver 120 is within range of the power transmitter 101;
- an NFC receiver device 122 (NFC receiver) coupled, for example connected, to the receiver antenna 121;
- a load controller 123 (Battery controller) coupled, for example connected, to the NFC receiver device 122;
- a load 124 (Battery) coupled, for example connected, to the load controller 123, the load for example being a battery, and the load controller 123 for example being a battery controller configured to control the batter 124.

In alternative embodiments, the power receiver 120 could additionally or alternatively comprise a different type of load.

The NFC receiver device 122 may be referred as an "NFC receiver".

The receiver antenna 121 may comprise one or more inductive coils or elements, for example in the form of a patch antenna or a microstrip antenna. The at least one inductive coil or element is, for example, connected to, or comprised in, an oscillating circuit (not represented).

The NFC receiver 122 is for example configured to manage Near-Field communications. For example, the NFC receiver 122 comprises demodulating and/or modulating circuits configured to demodulate and/or modulate a radiofrequency signal in order to receive data from, and/or send data to, the NFC transmitter 110, using NFC communication protocols.

For example, the NFC receiver 122 is, or comprises, a microchip or electronic circuit capable of near field communications.

In the example of Figures 1A and 1B, the NFC receiver 122 and receiver antenna 121 are also configured to manage NFC charging. In other words, the NFC receiver 122 is configured to receive an alternating current (I_{AC-RC}) induced by the transmitter antenna 111 in the receiver antenna 121, and to provide a current (I_{DC}) to the load controller 123. The load controller 123 provides a charging current (I_{LOAD}) to the load 124. In return, the load 124 for example sends a signal to the load controller 123, for example to inform it of the state of the load, such as the power level consumed by the load, and/or the level of charge of the load in the case that the load is a battery. The power receiver 120 also for example comprises a rectifier configured to convert the alternating current I_{AC-RC} into a direct current I_{DC}, for example between the NFC receiver 122 and the load controller 123 (not represented).

The NFC receiver 122 may be connected or coupled to, or may include, an impedance matching circuit (not represented), which in turn is connected or coupled to the receiver antenna 121.

In the example represented in Figures 1A and 1B, the NFC receiver 122 is included in the power receiver 120. For example, the power receiver 120 comprises one or several printed circuit boards (PCB) to which are assembled the NFC receiver 122, and for example the load controller 123, the load 124, and/or other elements (not represented) of the power receiver 120. Alternatively, the NFC receiver 122 may be coupled, for example connected, to the power receiver 120, which includes at least the load controller 123, the load 124, and other elements adapted to wirelessly receive power and transfer it to the load.

Although not shown in Figures 1A and 1B, the power transmitter 101, the NFC transmitter 110, the power receiver 120 and the NFC receiver 122 generally comprise other circuits, which are standard circuits well known to those skilled in the art.

When power is wirelessly transferred to the power receiver 120, the microcontroller 113 for example monitors the analog amplitude and/or phase signal sent by the frontend circuit 112 in order to indirectly detect if there is an impedance change within the field of the NFC transmitter 110. A detected impedance change may be due to various events.

An impedance change may be due to the arrival of an electrically-conductive foreign object 10 within the field (within range) of the NFC transmitter 110. The foreign object may be positioned between the power transmitter 101 and the power receiver 120, or in another place within range of the power receiver 120, as shown in Figure 1B.

If an electrically-conductive foreign object 10 is located within the field of the NFC transmitter 110, a coupling may occur between the foreign object 10 and the antenna 111 of the NFC transmitter 110. This coupling may modify the impedance of the oscillating circuit of the NFC transmitter 110, which results in a variation of the amplitude and/or phase of a signal across the terminals of this oscillating circuit, typically an electrical signal. The amplitude and/or phase of the electrical signal is output by the frontend 112 circuit, which sends it to the microcontroller 113. The microcontroller 113 is configured to detect an amplitude and/or phase variation of the electrical signal.

An impedance change may also be due to a removal of the power receiver 120 from the field of the NFC transmitter 110. The detection of such a removal is similar to that of the foreign object detection.

An impedance change detected by the microcontroller 113 may also be due to a signal sent by the power receiver 120, for example the NFC receiver 122 of the power receiver, to request that the power transfer is stopped or that the power level of the power transfer is changed. The detection of such a signal sent by the power receiver is explained in detail hereafter.

If the microcontroller 113 detects an impedance change within the field of the NFC transmitter 110, depending on the event, then the microcontroller 113 is for example configured to send a control signal (CTRL) to the frontend circuit 112, for example to stop the power transfer and/or to change the level of the transferred power, and/or the microcontroller 113 is for example configured to send a warning signal to a user interface 130, for example to warn a user to remove a foreign object.

The user interface 130 is coupled to the microcontroller 113, and may be included in, or connected to, the NFC transmitter 110, the power transmitter 101, or the power receiver 120. For example, the user interface 130 comprises a light source and/or a sound emitter or any other signal emitter adapted to warn a user.

Examples of methods adapted to detect a variation of the amplitude and/or phase of the analog signal, and thus, an impedance change in the field of the NFC transmitter 110, are described hereafter. For example, these detection methods are implemented in a computer program, for example executed by the processing unit 115. The computer program is, for example, stored in a memory of the microcontroller 113.

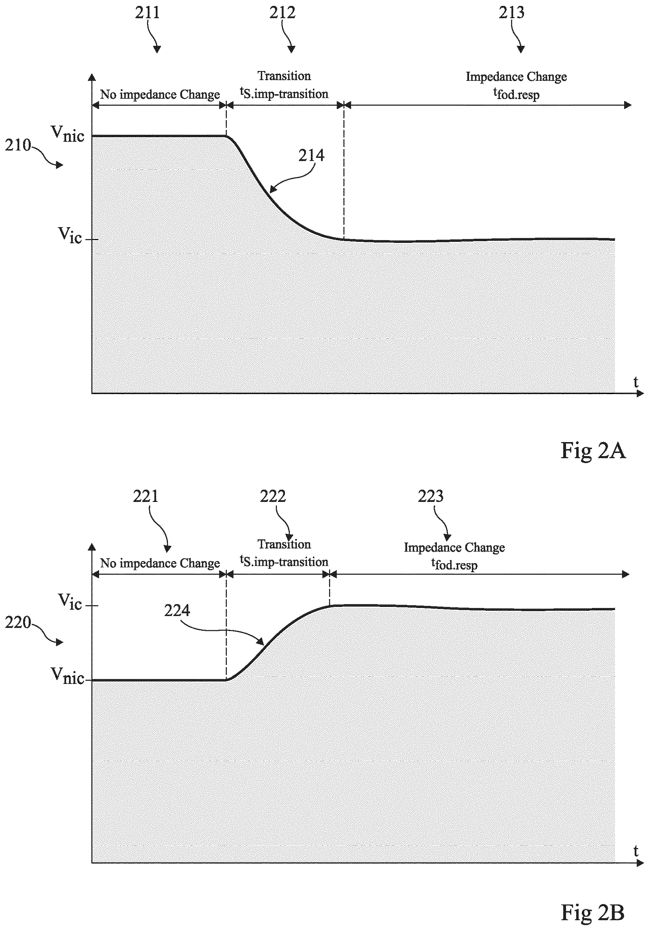

Figures 2A and 2B are graphs illustrating examples of the evolution, as a function of time t (on the x-axis), of an analog signal (on the y-axis) that can be detected in an NFC device according to an embodiment, for example by the microcontroller 113 of the NFC transmitter 110 of Figures 1A and 1B. In the example of Figures 2A and 2B, the illustrated analog signal corresponds to a voltage, and the voltage variation is a variation of voltage amplitude, which corresponds to a change of impedance (Impedance Change).

Figure 2A is a graph 210 illustrating a voltage drop 214, from V_{nic} (voltage when there is no impedance change) to V_{ic} (voltage when there is an impedance change) corresponding to an impedance rise, for example due to the arrival of an electrically-conductive foreign object 10. A "No Impedance Change" stage 211 and an "Impedance Change" stage 213 are separated by a transition period 212 (Transition) having a transition duration (t_{S,imp-transition}). The impedance change stage 213 has a change duration (t_{fod,resp}).

For example, in order to be considered as being due to a foreign object arrival, the change duration t_{foa,resp} of the impedance change stage 213 has to be more than a minimal change duration t_{fod,resp,min}, and/or the voltage drop 214, or the impedance rise, has to be greater than, or equal to, a first detection threshold, for example equal to a voltage drop, or impedance rise, of about 10%. For example, the detection method may validate a foreign object presence if the voltage drop or impedance rise is greater or equal to the first detection threshold and lasts at least the minimal change duration t_{fod,resp,min}.

By monitoring the voltage amplitude, the microcontroller 113 is for example configured to detect the impedance rise, for example after the transition period 212. If the event is the arrival of an electrically-conductive foreign object 10, the microcontroller 113 is then for example configured to send a control signal to the frontend circuit 112, for example to stop the power transfer or limit the level of the transferred power, and/or the microcontroller 113 is configured to send a warning signal to the user interface 130 to warn a user to remove the foreign object. For example, the microcontroller 113 sends a control and/or warning signal if the first detection threshold is crossed and if the minimal change duration t_{fod,resp,min} is respected.

For example, the transition duration t_{S,imp-transition} of the transition period is about 50 ms. For example, the minimal change duration t_{fod,resp,min} is equal to about 1,4 ms. For example, the change duration t_{foa,resp} is comprised between 1,4 ms and 110 ms, for example equal to about 50 ms.

Figure 2B is a graph 220 illustrating a voltage rise 224, from V_{nic} (voltage when there is no impedance change) to V_{ic} (voltage when there is an impedance change), corresponding to an impedance drop, for example due to the removal of the power receiver 120. A "No Impedance Change" stage 221 and an "Impedance Change stage" 223 are separated by a transition period 222 (Transition) having a transition duration (t_{S,imp-transition}). The impedance change stage 223 has a change duration (t_{fod,reap}).

For example, in order to be considered as being due to the removal of the power receiver, the change duration t_{fod,resp} of the impedance change stage 223 has to be more than a minimal change duration t_{fod,resp,min}, and/or the voltage rise 224, or the impedance drop, has to be greater than, or equal to, a second detection threshold, for example equal to a voltage rise, or impedance drop, of about 10%. For example, the detection method may validate the removal of the power receiver if the voltage rise or impedance drop is greater or equal to the second detection threshold and lasts at least the minimal change duration t_{fod,resp,min}.

By monitoring the voltage amplitude, the microcontroller 113 is for example capable of detecting the impedance drop, for example after the transition period 222. If the event is the removal of the power receiver 120, the microcontroller 113 is for example configured to send a control signal to the frontend circuit 112 to stop the power transfer or to limit the level of transfer power. For example, the microcontroller 113 is configured to send a signal if the second detection threshold is crossed and if the minimal change duration t_{fod,resp,min} is respected.

For example, the transition duration t_{S,imp-transition} of the transition period is about 50 ms. For example, the minimal change duration t_{foa,resp,min} is equal to about 1,4 ms. For example, the change duration t_{foa,resp} is comprised between 1,4 ms and 110 ms, for example equal to about 50 ms.

An example of a first detection method will now be described, with reference to Figures 2A and 2B. The first detection method described hereafter is for example included in a method for controlling wireless power transfer according to an embodiment. The first detection method is for example a foreign object detection method.

Figures 2A and 2B, and the detecting method described hereafter, illustrate an amplitude variation, but the principle would be similar for a phase variation.

At least during power transfer, the analog amplitude (and/or the phase) signal is for example continuously sent by the frontend circuit 112 to the analog-to-digital converter 114, which transforms the analog signal into a digital signal. The amplitude (and/or the phase) signal is for example in the form of an analog voltage level. The digital signal is for example processed by the processing unit 115.

The processing unit 115 is for example configured to perform a first averaging of the digital signal during an averaging period, which is preferably comprised between 4 and 10 ms, for example equal to 8 ms, in order to generate a first average value, which can be used as an average reference value.

Then, the processing unit 115 is for example configured to perform a second averaging of the digital signal, during the same averaging period, after the first averaging, the first and second averaging being separated by a waiting period, which is preferably chosen to be close to the transition duration t_{S,imp-transition}. For example, the waiting period has a duration of between 40 and 60 ms, for example equal to around 50 ms. The second averaging generates a second average value, which is compared, for example by the processing unit 115, to the average reference value, in order to determine if there is a variation, for example a variation greater than, or equal to, a (first or second) detection threshold, and for example if the variation is a drop or a rise.

If the detected variation is greater or equal to the (first or second) detection threshold, and if the variation duration is greater or equal to the minimal change duration t_{fod,resp,min}, then the microcontroller 113 is for example configured to send a control signal to the frontend circuit 112 and/or a warning signal to the user interface 130, depending on the detected event.

If the detected variation is below the (first or second) detection threshold, and/or if the variation duration is less than the minimal change duration t_{too,resp,min}, then the processing unit 115 is for example configured to perform a third averaging, after the waiting period, using the same averaging period, in order to generate a third average value, and the third average value is compared to the second average value. This process is for example repeated, with the current average value being compared with the previous average value, until an event is detected.

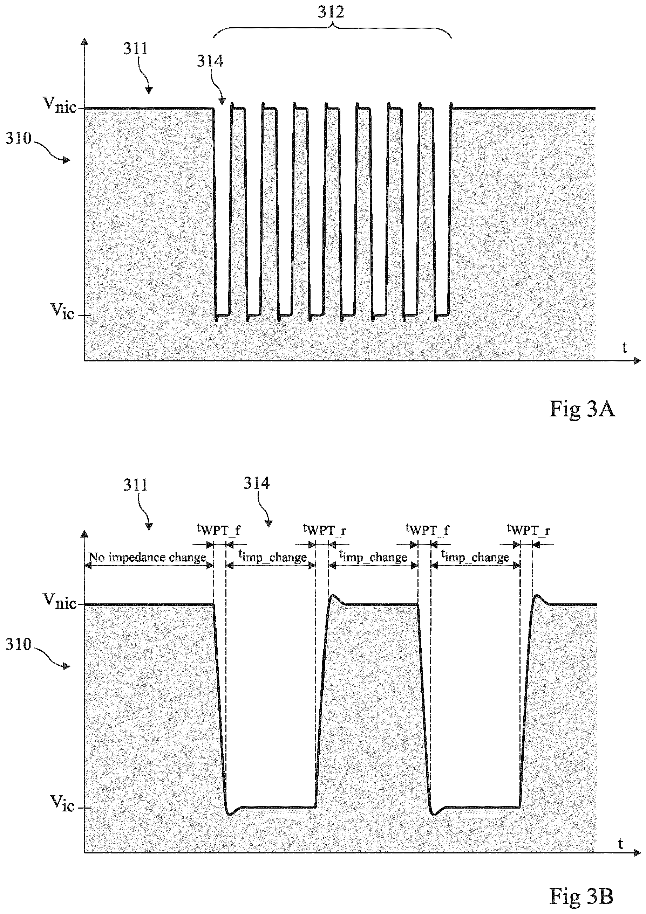

Figure 3A is a graph 310 illustrating another example of the evolution, as a function of time t (on the x-axis), of an analog signal (on the y-axis) that can be detected in an NFC device according to an embodiment, for example by the microcontroller 113 of the NFC transmitter 110 of Figures 1A and 1B. Figure 3B is a graph illustrating a portion of the graph of Figure 3A in greater detail. In the example of Figures 3A and 3B, the illustrated analog signal corresponds to a voltage, and the voltage variation represents an amplitude variation, for example resulting from a change of impedance.

The graph 310 comprises a No Impedance Change stage 311 and an Impedance Change stage 312, which corresponds to a request signal to stop the wireless power transfer (WPT). It may be used by the power receiver to then request for another power level. The WPT stop signal 312 is for example sent by the power receiver, for example the NFC receiver 122 of the power receiver 120 of Figures 1A and 1B. For example, the load controller 123 is configured to send a signal to the NFC receiver 122 indicating that the charge is completed, and the NFC receiver 122 in turn is configured to send a WPT stop signal to the NFC transmitter 110.

For example, the WPT stop signal is generated by the NFC receiver 122 by periodically disconnecting and reconnecting the receiver antenna 121, or by periodically changing the impedance of the receiver antenna 121.

The WPT stop signal 312 is for example a square-wave signal comprising a plurality of elementary stop patterns 314 (also named "S patterns"), illustrated as short voltage drops from V_{nic} to V_{ic}, corresponding to impedance rises, two voltage drops being separate by a voltage rise from V_{ic} to V_{nic}. In Figure 3A, the WPT stop signal 312 comprises eight elementary S patterns 314, but it may be sufficient that the NFC transmitter 110 detects less elementary S patterns, typically at least four or five elementary S patterns, in order to detect the WPT stop signal.

In order to be considered as an elementary stop pattern (S pattern), the duration (t_{imp-change}) during which the voltage is low (low pulse duration) is for example lower than a pulse duration threshold which is for example comprised between 0.8 and 1.2 ms, for example equal to about 1 ms, and the rise times (t_{WPT-r}) and fall times (t_{WPT-f}) of the voltage signal (signal transitions) are for example lower than a transition threshold, for example about 2.5 µs. In addition, the voltage drop, or the impedance rise, is for example greater than, or equal to, a third detection threshold, for example about 6 or 7 %.

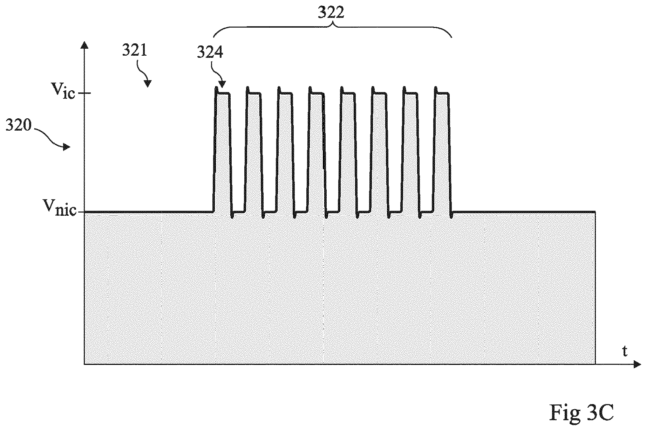

Figure 3C is a graph 320 illustrating another example of the evolution, as a function of time t (on the x-axis), of an analog signal (on the y-axis) that can be detected in an NFC device according to an embodiment, for example by the microcontroller 113 of the NFC transmitter 110 of Figures 1A and 1B. In the example of Figure 3C, the illustrated analog signal corresponds to a voltage, and the voltage variation represents an amplitude phase variation, for example resulting from a change of impedance.

The graph 320 of Figure 3C differs from that of Figure 3A mainly in that each elementary pattern 324 is a voltage rise from V_{nic} to V_{ic}, corresponding to an impedance drop, two voltage rises being separate by a voltage drop from V_{ic} to V_{nic}.

The graph 320 comprises a No Impedance Change stage 321 and an Impedance Change stage 322, which also corresponds to a request signal to stop the wireless power transfer (WPT). It may be used by the power receiver to then request for another power level. The level change request signal 322 is for example a square-wave signal comprising a plurality of elementary stop patterns 324, illustrated as short voltage rises from V_{nic} to V_{ic}, corresponding to impedance drops, two voltage drops being separate by a voltage drop from V_{ic} to V_{nic}. In Figure 3C, the level change request signal 322 comprises eight elementary patterns 324, but it may be sufficient that the NFC transmitter 110 detects less elementary patterns, typically at least four or five elementary patterns, in order to detect the request signal.

The request signal 322 is typically sent by the power receiver, for example the NFC receiver 122 of the power receiver 120 of Figures 1A and 1B. For example, the load controller 123 is configured to send a signal to the NFC receiver 122 requesting a change of the power level, and the NFC receiver in turn is configured to send a power level change request signal to the NFC transmitter 110.

In order to be considered as an elementary stop pattern (S pattern), the duration during which the voltage is high (high pulse duration) is for example lower than a pulse duration threshold, for example comprised between 0.8 and 1.2 ms, for example equal to about 1 ms, and/or the rise times and fall times of the voltage signal (signal transitions) are lower than a transition threshold, for example about 2.5 µs. In addition, the impedance drop, or the voltage rise, is for example greater than, or equal to, a fourth detection threshold, for example about 6 or 7 %.

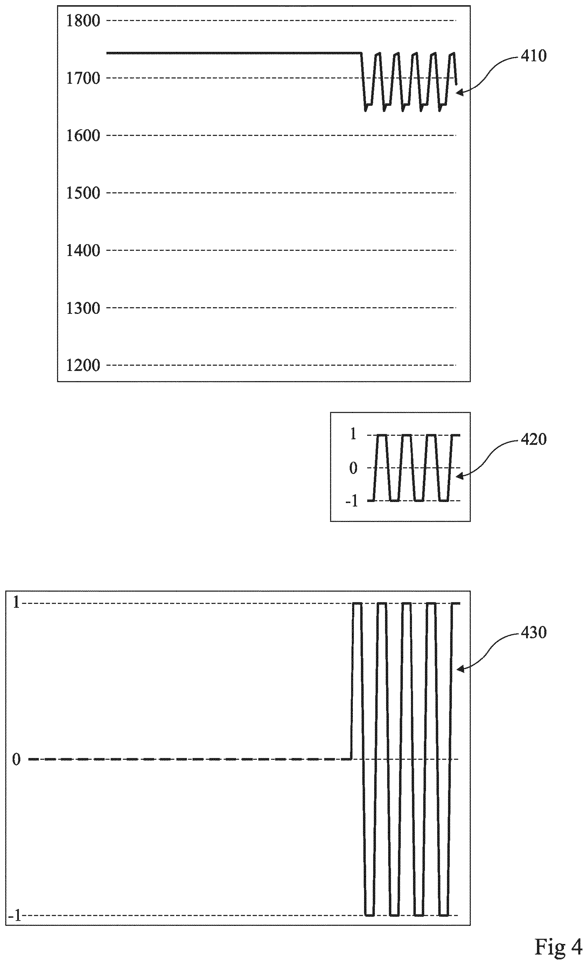

An example of a second detection method will now be described with reference to Figures 3A, 3B, and 4. The second detection method is for example included in a method for controlling wireless power transfer according to an embodiment. The second detection method is for example a WPT stop detection method.

At least during power transfer, the phase (and/or the amplitude) of the analog signal is continuously sent by the frontend circuit 112 to the analog-to-digital converter 114, which is configured to sample the analog signal, for example the analog phase signal, for example every 250 µs. Graph 410 of Figure 4 illustrates an example of the result of the sampling comprising five elementary S patterns. The DC part of the sample is removed using a convolution with a square-wave signal, for example at a frequency of 500 Hz, generated for example by a clock generator (not illustrated). Then, for example, a thresholding is applied, for example by the processing unit 115, so that a simple state machine can detect one or more elementary S patterns, for example by detecting a transition from high to low or low to high with a duration within a given time range.

For example, the analog-to-digital converter 114 is a n-bit ADC, where n is for example equal to at least 12.

The first and second detection methods may be implemented simultaneously. Indeed, applying the first detection method to a WPT stop signal does not trigger a foreign object detection, because the frequency of 500 Hz corresponds to a duration of 2 ms for each S pattern, and the averaging period of the first detection method is greater than 2 ms, therefore, averaging the WPT stop signal would result in an average value of at most around half the magnitude of the voltage change, which for example does not exceed the foreign object detection threshold (third or fourth detection threshold).

In an embodiment, if a first S pattern of a WPT stop signal is detected by the second detection method, then the first detection method is inhibited at least for the duration of the WPT stop signal.

The method for detecting the power level change signal of Figure 3C may be similar to the method for detecting the WPT stop signal of Figures 3A and 3B.

Figure 4 illustrates a detection method based on the analog amplitude signal), but the principle would be similar for an analog phase signal.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

## Claims

1. A NFC device (110) configured for wireless power transfer, the NFC device comprising:
- an antenna (111);
- a frontend circuit (112) coupled to the antenna;
- a microcontroller unit (113) coupled to the frontend circuit, the microcontroller unit comprising an analog-to-digital converter (114);
wherein the analog-to-digital converter is configured to receive an analog amplitude and/or phase signal (AM/PH) from the frontend circuit, and to convert said analog signal into a digital signal (DS), and the microcontroller unit is configured to process the digital signal in order to detect a variation in the amplitude and/or phase of the analog signal, so as to detect a change of impedance within the field of the NFC device.

2. The NFC device (110) according to claim 1, wherein the microcontroller unit (113) is adapted to:
- detect a change of impedance during a wireless power transfer between the NFC device (110) and an NFC receiver (120); and/or
- compare the variation of the analog signal with at least one detection threshold and/or with a change duration threshold or a pulse duration threshold; and/or
- send a control signal to the frontend circuit (112), for example to stop the power transfer or to change the level of the transferred power; and/or
- send a warning signal to a user interface (130) coupled to the microcontroller unit, for example to warn a user of a presence of an electrically-conductive foreign object (10) .

3. A method for controlling wireless power transfer using a NFC device (110) having a frontend circuit (112) coupled to a microcontroller unit (113), the controlling method comprising:
- sending an analog amplitude and/or phase signal (AM/PH) from the frontend circuit to the microcontroller unit, the microcontroller unit comprising an analog-to-digital converter (114);
- converting the analog amplitude and/or phase signal into a digital signal (DS) using the analog-to-digital converter; and
- processing the digital signal, using the microcontroller unit, in order to detect a variation of the analog amplitude and/or phase signal, so as to detect a change of impedance within the field of the NFC device.

4. The method according to claim 3, the method being implemented during a wireless power transfer between the NFC device (110) and an NFC receiver (120), for example continuously during the wireless power transfer.

5. The method according to claim 3 or 4, comprising a first detection method implemented by the microcontroller unit (113), the first detection method comprising, after or during the step of processing the digital signal:
- determining if the impedance change is greater or equal to a detection threshold; and, for example,
- determining if the duration of the impedance change is greater or equal to a minimal change duration.

6. The method according to claim 5, wherein the first detection method is adapted to detect whether an electrically-conductive foreign object (10) is within the field of the NFC device (110), the impedance change is, for example, an impedance rise, and the detection threshold is a first detection threshold.

7. The method according to claim 5 or 6, wherein the first detection method is adapted to detect whether a power receiver (120), or an electrically-conductive foreign object (10), is removed from the field of the NFC device (110), the impedance change is, for example, an impedance drop, and the detection threshold is a second detection threshold.

8. The method according to any of claims 5 to 7, wherein determining if the impedance change is greater or equal to the detection threshold comprises:
- performing an averaging of the digital signal during an averaging period, in order to generate a current average value;
- comparing the current average value with an average reference value; and
- determining if the difference between the current average value and the average reference value is greater or equal to the detection threshold.

9. The method according to claim 8, wherein the average reference value corresponds to a previous average value obtained by a previous averaging, the current averaging being separated from the previous averaging by a transition period.

10. The method according to any of claims 3 to 9, comprising a second detection method implemented by the microcontroller unit (113), the second detection method being for example adapted to detect whether a wireless power transfer stop signal is sent to the NFC device (110), the second detection method comprising:
- detecting a sequence of at least four periods of a square-wave signal, each period comprising one or more signal transitions having a duration of less than a transition threshold and/or each period comprising a high pulse duration or low pulse duration of less than a pulse duration threshold.

11. The NFC device according to claim 1 or 2, or the method according to any of claims 3 to 10, wherein the analog-to-digital converter is an n-bit analog-to-digital converter, for example where n is equal to at least 10.

12. The NFC device according to any of claims 1, 2 or 11, or the method according to any of claims 3 to 11, wherein the microcontroller unit (113) further comprises a processing unit (115) adapted to process the digital signal.

13. The NFC device according to any of claims 1, 2, 11 or 12, or the method according to any of claims 3 to 12, wherein the analog-to-digital converter is coupled to a first pin of the frontend circuit adapted to output the amplitude analog signal and/or a second pin of the frontend circuit adapted to output the phase analog signal.

14. The NFC device according to any of claims 1, 2, or 11 to 13, or the method according to any of claims 3 to 13, wherein the analog signal is an electrical signal.

15. A wireless power transmission system (100) comprising:
- a wireless power transmitter (101) comprising or coupled to an NFC device (110) according to any of claims 1, 2, or 11 to 14, the NFC device being an NFC transmitter.

16. The wireless power transmission system according to claim 15, further comprising a wireless power receiver (120) including:
- a receiver antenna (121) adapted to be electromagnetically coupled to the antenna (111) of the NFC transmitter (110); and
- an NFC receiver (122) coupled, for example connected, to the receiver antenna (121), and configured to manage Near Field communications with the NFC transmitter (110).

17. The wireless power transmission system according to claim 16, wherein the NFC receiver (122) is also configured to manage NFC charging, and is connected to a load (124) of the wireless power receiver (120), for example via a load controller (123).

18. The wireless power transmission system according to any of claims 15 to 17, further comprising a user interface (130) coupled to the microcontroller unit (113) of the NFC transmitter (110), the user interface being adapted to send a warning signal to a user, for example if the impedance change corresponds to the presence of an electrically-conductive foreign object (10) in the field of the NFC transmitter.
